# EUROPÄISCHE PATENTSCHRIFT

(11) **EP 4 461 458 B1**
(45) Veröffentlichungstag und Bekanntmachung des Hinweises auf die Patenterteilung: **20.08.2025**
(21) Anmeldenummer: 24173739.4
(22) Anmeldetag: 02.05.2024
(51) Int. Cl.: B23Q 1/48, B23Q 1/62

(54) **WERKZEUGMASCHINE UND VERFAHREN ZUR BEARBEITUNG VON WERKSTÜCKEN**
MACHINE TOOL AND METHOD FOR MACHINING WORKPIECES
MACHINE-OUTIL ET PROCÉDÉ D'USINAGE DE PIÈCES

(30) Priorität: 10.05.2023 DE 102023112340
(43) Veröffentlichungstag der Anmeldung: 13.11.2024
(73) Patentinhaber: CHIRON Group SE, 78532 Tuttlingen (DE)
(72) Erfinder: Widinger, Tobias, 78315 Radolfzell (DE); Gems, Daniel, 78607 Talheim (DE)
(74) Vertreter: Witte, Weller & Partner Patentanwälte mbB

(56) Entgegenhaltungen:
- DE-A1- 102006 007 700
- DE-A1- 102021 110 339
- DE-C2- 19 919 647

## Beschreibung

Die vorliegende Offenbarung befasst sich allgemein mit der feinmechanischen Fertigung mit Werkzeugmaschinen. In beispielhaften Ausgestaltungen befasst sich die vorliegende Offenbarung mit der automatisierten Fertigung feinmechanischer Bauteile. Dies umfasst beispielsweise die Herstellung von Bauteilen für Anwendungen in der Medizintechnik. Dies ist jedoch nicht einschränkend zu verstehen. Die Bearbeitung umfasst üblicherweise eine spanabhebende Bearbeitung, beispielsweise mittels Fräsen, Bohren und/oder Drehen. In beispielhaften Ausgestaltungen bezieht sich die vorliegende Offenbarung auf kompakt gestaltete Werkzeugmaschinen sowie auf Verfahren zur Bearbeitung von Werkstücken mit kompakt gestalteten Werkzeugmaschinen.

Kompakt gestaltete Werkzeugmaschinen sind beispielsweise solche mit einem Arbeitsraum, der kleiner als 250 mm x 250 mm x 250 mm ist. In beispielhaften Ausgestaltungen ist der Arbeitsraum der Werkzeugmaschine kleiner als 200 mm x 200 mm x 200 mm. In beispielhaften Ausgestaltungen ist der Arbeitsraum der Werkzeugmaschine kleiner als 150 mm x 150 mm x 150 mm. In beispielhaften Ausgestaltungen ist der Arbeitsraum der Werkzeugmaschine kleiner als 100 mm x 100 mm x 100 mm. In beispielhaften Ausgestaltungen ist der Arbeitsraum der Werkzeugmaschine kleiner als 75mm x 75 mm x 75 mm. Diese Angaben betreffen insbesondere die möglichen Vorschübe (Verfahrwege) entlang der X, Y sowie der Z-Achse. Der Arbeitsraum kann würfelförmig gestaltet sein. Es sind jedoch auch quaderförmige Bauräume denkbar, deren Verfahrwege in X, Y sowie Z nicht einheitlich sind.

Aus der US 2019/0084102 A1 ist eine kompakt gestaltete Werkzeugmaschine bekannt. Aus der DE 10 2021 113 890 A1 ist ein Fertigungssystem für die spanende Fertigung mit zumindest einer insbesondere kompakt gestalteten Werkzeugmaschine und einer Handhabungszelle bekannt. Aus der DE 10 2021 110 339 A1 ist eine Werkzeugmaschine mit einer Abstützeinheit bekannt, wobei die Abstützeinheit flache Werkstücke bei der Bearbeitung stützen kann. Diese Abstützeinheit eignet sich beispielsweise für die Bearbeitung insbesondere rondenartiger Werkstücke mittels Mehrseitenbearbeitung.

Aus der DE 10 2006 007 700 A1, die die Basis für den Oberbegriff des Anspruchs 1 bildet, und der DE 10 2006 063 037 B3 sind Werkzeugmaschinen bekannt, die eine Bearbeitung von Werkstücken in sechs Achsen (an sechs Seiten) erlauben, wobei dies eine Übergabe des Werkstücks zwischen einer ersten Werkstückspindel und einer zweiten Werkstückspindel umfasst. Aus der DE 199 19 647 C2 ist eine Werkzeugmaschine bekannt, mit der Werkstücke in sechs Achsen (an sechs Seiten) bearbeitet werden können. Zu diesem Zweck wird eine Handhabungseinheit genutzt, die zum einen zur Entnahme von Werkstücken von einem Werkstückträger und zum anderen in Kombination mit einer Spannstation selbst als Werkstückhalter dient, sodass in der Spannstation gesicherte Werkstücke bearbeitet werden können.

Mit den in der DE 10 2006 007 700 A1, der DE 10 2006 063 037 B3 sowie der DE 199 19 647 C2 ist grundsätzlich eine Allseitenbearbeitung von Werkstücken umsetzbar, die Maschinenkonzepte bedingen jedoch große Bauräume aufgrund der erforderlichen Verfahrwege zur Übergabe der Werkstücke zwischen zwei Spannzuständen.

Zumindest in beispielhaften Ausgestaltungen bezieht sich die vorliegende Offenbarung auf die umfassende Bearbeitung von Werkstücken, beispielsweise eine Mehrseitenbearbeitung oder Fertigbearbeitung. Im Sinne der vorliegenden Offenbarung ist eine Fertigbearbeitung eines Werkstücks eine Bearbeitung, die keinen Transfer zu einer weiteren (gleichartigen) Werkzeugmaschine erforderlich macht, weil ein Werkstück grundsätzlich an all seinen relevanten Seiten bearbeitet werden kann. Dies spielt etwa dann eine Rolle, wenn Werkstücke an Seiten zu bearbeiten sind, die ihrerseits wiederum zur Einspannung in einen Werkstückhalter gebraucht werden.

Wenn nun ein Werkstück an einer solchen Seite fixiert ist, kann es nicht einfach so an dieser Seite bearbeitet werden. Dies kann dazu führen, dass die Bearbeitung eines solchen Werkstücks in mehrere Abschnitte unterteilt ist, zwischen denen das Werkstück zu transferieren ist. Dies ist nachteilig für die Produktivität.

Der vorliegenden Offenbarung liegt die Aufgabe zugrunde, eine Werkzeugmaschine anzugeben, die sich zur Fertigbearbeitung von Werkstücken eignet. Dies soll insbesondere die Möglichkeit zur Bearbeitung von Abschnitten des Werkstücks umfassen, die jedenfalls in einer ersten Aufspannung nicht ohne weiteres zugänglich sind. Die Werkzeugmaschine soll möglichst eine Bearbeitung in sechs Achsen ermöglichen.

Die Werkzeugmaschine soll vorzugsweise kompakt gestaltet und insbesondere ressourceneffizient betreibbar sein. Die Werkzeugmaschine soll sich insbesondere für die Bearbeitung und Herstellung feinmechanischer Bauteile eignen. Die Werkzeugmaschine soll möglichst einen automatisierten Ladevorgang und Entladevorgang ermöglichen. Die Werkzeugmaschine soll auch möglichst einen automatisierten Rüstvorgang (betreffend zumindest den Werkzeugwechsel) erlauben. Ferner soll ein einschlägiges Verfahren zur Bearbeitung, insbesondere zur Fertigbearbeitung oder Mehrseitenbearbeitung, von Werkstücken angegeben werden.

Gemäß einem ersten Aspekt bezieht sich die vorliegende Erfindung auf eine Werkzeugmaschine für die Fertigbearbeitung von Werkstücken, die Folgendes aufweist:
- ein Gestell,
- eine Werkzeugspindel mit einem Werkzeughalter zur Aufnahme eines Werkzeugs,
- einen primären Werkstückhalter zur Aufnahme eines Werkstücks, und
- einen sekundären Werkstückhalter,
   wobei die Werkzeugspindel und der primäre Werkstückhalter in zumindest drei translatorischen Achsen und zumindest einer rotatorischen Achse relativ zueinander verfahrbar sind, um in einem Arbeitsraum ein am primären Werkstückhalter aufgenommenes Werkstück zu bearbeiten,
   wobei der sekundäre Werkstückhalter in zumindest einer translatorischen Achse relativ zum primären Werkstückhalter fixiert ist,
   wobei der primäre Werkstückhalter in eine Übergabeorientierung verschwenkbar ist, in der ein Greifen des Werkstücks durch den sekundären Werkstückhalter ermöglicht ist,
   wobei der primäre Werkstückhalter über ein Schwenklager um die rotatorische Achse schwenkbar an einem relativ zur Werkzeugspindel translatorisch verfahrbaren Y-Schlitten gelagert ist,
   wobei der Y-Schlitten einen Halteflansch aufweist, der hinsichtlich der rotatorischen Achse drehfest angeordnet ist, und
   wobei der sekundäre Werkstückhalter am Halteflansch befestigt ist.

Auf diese Weise wird die der Offenbarung zugrundeliegende Aufgabe gelöst.

Offenbarungsgemäß wird nämlich eine Werkzeugmaschine bereitgestellt, die zum einen kompakt gestaltet ist und zum anderen eine Fertigbearbeitung ermöglichen kann. Dies bezieht sich insbesondere auf die Bearbeitung desjenigen Abschnitts des Werkstücks, der zuvor durch die Einspannung im primären Werkstückhalter für die Werkzeugspindel nicht erreichbar war.

Die Bearbeitung erfolgt dabei mit ein und derselben Werkzeugspindel, unabhängig davon, ob das Werkstück am primären Werkstückhalter, am sekundären Werkstückhalter oder durch beide Werkstückhalter gleichzeitig gehalten ist. Dies gilt zumindest für beispielhafte Ausgestaltungen. Die Werkzeugspindel ist beispielhaft als Frässpindel oder Bohrspindel zur Aufnahme von Fräswerkzeugen oder Bohrwerkzeugen gestaltet.

In beispielhaften Ausgestaltungen erlaubt die Werkzeugmaschine in einen (einzigen) Arbeitsraum mit einer (einzigen) Kinematik die Bearbeitung von Werkstücken in sechs Achsen. Üblicherweise sind Werkzeugmaschinen zur Bearbeitung in weniger als sechs Achsen befähigt (beispielsweise in drei, vier oder fünf Achsen). Der Hauptgrund dafür ist, dass das Werkstück an zumindest einer Seite eingespannt werden muss.

Offenbarungsgemäß ist nun mit dem sekundären Werkstückhalter ein weiterer Werkstückhalter vorgesehen, der zumindest zeitweise das Werkstück greifen und halten kann. Auf diese Weise lässt sich auch eine sechste Seite des Werkstücks bearbeiten. Die Bearbeitung kann beispielhaft ein Trennen des Werkstücks (Fertigteils) von einem Reststück umfassen, das im primären Werkstückhalter eingespannt ist. Das Trennen kann durch die (einzige) Werkzeugspindel durchgeführt werden. Die Bearbeitung kann jedoch auch eine Bearbeitung des vom primären Werkstückhalter gelösten Werkstücks an derjenigen Seite umfassen, die zuvor im primären Werkstückhalter eingespannt war. Auch dies kann mit der (einzigen) Werkzeugspindel der Werkzeugmaschine durchgeführt werden.

Die translatorische Achse ist beispielhaft als B-Achse (Schwenkachse für rotatorische Bewegungen um die Y-Achse) gestaltet. Die translatorische Achse ist beispielhaft eine horizontale Achse.

Der primäre Werkstückhalter und der sekundäre Werkstückhalter sind hinsichtlich der translatorischen Achse (Y-Achse) zur gemeinsamen Bewegung miteinander gekoppelt. Wenn also der Y-Schlitten in der Y-Richtung relativ zum Gestell der Werkzeugmaschine verfahren wird, werden damit auch der primäre Werkstückhalter und der sekundäre Werkstückhalter richtungsgleich und betragsgleich in der Y-Richtung bewegt. Zusätzlich ist der primäre Werkstückhalter über ein Schwenklager um diese Achse (B-Achse) verschwenkbar, die sekundäre Werkstückspindel ist nicht um die B-Achse verschwenkbar. Auf diese Weise kann der primäre Werkstückhalter relativ zum sekundären Werkstückhalter bewegt werden, um ein Werkstück zu übergeben. Es wird keine zusätzliche Kinematik für diese Relativbewegung benötigt.

Der sekundäre Werkstückhalter benötigt nur wenig Bauraum im Arbeitsraum. Auf diese Weise kann auch in einem kompakt gestalteten Arbeitsraum eine Fertigbearbeitung oder Sechs-Seiten-Bearbeitung durchgeführt werden.

Der sekundäre Werkstückhalter weist beispielhaft nur wenige Bewegungsfreiheitsgrade gegenüber dem primären Werkstückhalter auf. Der sekundäre Werkstückhalter ist zumindest dazu ausgebildet, sich zu öffnen und zu schließen, um ein Werkstück einzuspannen oder freizugeben. Im Übrigen ist der sekundäre Werkstückhalter in zumindest einer translatorischen Achse relativ zum primären Werkstückhalter fixiert. In einer beispielhaften Ausgestaltung ist der sekundäre Werkstückhalter in zwei translatorischen Achsen relativ zum primären Werkstückhalter fixiert. In einer beispielhaften Ausgestaltung ist der sekundäre Werkstückhalter in drei translatorischen Achsen relativ zum primären Werkstückhalter fixiert. In einer beispielhaften Ausgestaltung ist der sekundäre Werkstückhalter hinsichtlich etwaiger Rotationsfreiheitsgrade gegenüber dem Gestell der Werkzeugmaschine fixiert. Dies bezieht sich ausdrücklich nicht auf etwaige Schwenkbewegungen von Greifarmen oder dergleichen zum Öffnen oder Schließen.

Wenn der sekundäre Werkstückhalter in zumindest einer translatorischen Achse relativ zum primären Werkstückhalter fixiert ist, vorzugsweise in zwei oder drei translatorischen Achsen, ist keine aufwändige Kinematik für den sekundären Werkstückhalter erforderlich. Der sekundäre Werkstückhalter kann besonders kompakt gestaltet und in einer günstigen Relativorientierung in Bezug auf dem primären Werkstückhalter positioniert werden. Auf diese Weise sind keine Verfahrantriebe für den sekundären Werkstückhalter erforderlich (wiederum unbeschadet etwaiger Aktoren für das Öffnen und Schließen).

Beispielhaft sitzt der sekundäre Werkstückhalter gemeinsam mit dem primären Werkstückhalter auf einem Schlitten. Der primäre Werkstückhalter ist jedoch in zumindest einer rotatorischen Achse (beispielsweise B-Achse) relativ zum sekundären Werkstückhalter verschwenkbar. Auf diese Weise kann der primäre Werkstückhalter in eine günstige Orientierung gebracht werden, in der das im primären Werkstückhalter eingespannte Werkstück vom sekundären Werkstückhalter gegriffen werden kann.

Die Übergabeorientierung ist beispielsweise eine horizontale Orientierung. Die Übergabeorientierung des primären Werkstückhalters ist nicht nur auf die Übergabe des Werkstücks limitiert. Mit anderen Worten kann also auch in der Übergabeorientierung des primären Werkstückhalters eine Bearbeitung des Werkstücks erfolgen. Dies kann in einem Zustand erfolgen, in dem der sekundäre Werkstückhalter außer Eingriff steht. Dies kann jedoch auch in einem Zustand erfolgen, in dem der sekundäre Werkstückhalter an das Werkstück angreift.

Gemäß einer beispielhaften Ausgestaltung ist die Werkzeugspindel vertikal orientiert, wobei der primäre Werkstückhalter zwischen einer vertikalen Orientierung und einer horizontalen Orientierung verschwenkbar ist, und wobei der primäre Werkstückhalter in der Übergabeorientierung horizontal orientiert ist. Die Werkzeugspindel ist vertikal orientiert, wenn die Längsachse der Spindel, um die das Werkzeug rotierbar ist, vertikal orientiert ist.

Gemäß einer weiteren beispielhaften Ausgestaltung umfasst der sekundäre Werkstückhalter einen Greifer, der in einer Haltestellung zum Halten des Werkstücks und in einer Lösestellung zur Freigabe des Werkstücks betreibbar ist. Damit sind zwei definierte Zustände gegeben. In der Lösestellung kann genügend Freiraum vorhanden sein, so dass eine Bearbeitung in dem Bereich erfolgen kann, der in der Haltestellung nicht für die Werkzeugspindel zugänglich ist.

Gemäß einer weiteren beispielhaften Ausgestaltung ist der primäre Werkstückhalter ferner um eine zweite rotatorische Achse rotierbar, wobei die zweite rotatorische Achse in einer vertikalen Orientierung des primären Werkstückhalters parallel zur Werkzeugspindel orientiert ist, und wobei die zweite rotatorische Achse in der Übergabeorientierung des primären Werkstückhalters horizontal orientiert ist. Die zweite rotatorische Achse kann auch als C-Achse bezeichnet werden. Sofern der primäre Werkstückhalter um zwei rotatorische Achsen (B-Achse und C-Achse) verschwenkbar/rotierbar ist, kann mit der Werkzeugmaschine bei Nutzung des primären Werkstückhalters eine Bearbeitung des Werkstücks in fünf Achsen erfolgen. Unter Hinzunahme des sekundären Werkstückhalters ist eine Bearbeitung in sechs Achsen ermöglicht. Die Übergabe des Werkstücks vom primären Werkstückhalter an den sekundären Werkstückhalter kann ohne zusätzliche Verfahrantriebe/Schwenkantriebe bewerkstelligt werden.

Gemäß einer weiteren beispielhaften Ausgestaltung weist die Werkzeugmaschine ferner Folgendes auf:
- einen X-Schlitten, der in einer ersten horizontalen Richtung translatorisch verfahrbar ist,
- einen Y-Schlitten, der in einer zweiten horizontalen Richtung translatorisch verfahrbar ist, und
- einen Z-Schlitten, der in einer vertikalen Richtung translatorisch verfahrbar ist,
   wobei der primäre Werkstückhalter und der sekundäre Werkstückhalter an einem gemeinsamen Y-Schlitten angeordnet sind.

Hierbei ist der primäre Werkstückhalter beispielsweise in einer oder zwei rotatorischen Achsen verschwenkbar am Y-Schlitten gelagert. Der sekundäre Werkstückhalter ist beispielsweise direkt am Y-Schlitten befestigt, wobei dies zusätzliche Bewegungsfreiheitsgrade zwischen dem sekundären Werkstückhalter und dem Y-Schlitten ausschließt.

Gemäß einer weiteren beispielhaften Ausgestaltung ist die Werkzeugspindel in einer ersten horizontalen Richtung und der vertikalen Richtung am Gestell verfahrbar. Damit ist bei einem Werkstück, das im zweiten Werkstückhalter eingespannt und fixiert ist, zumindest eine Bearbeitung in drei (translatorischen) Achsen ermöglicht.

Gemäß einer weiteren beispielhaften Ausgestaltung ist der primäre Werkstückhalter mittelbar über ein Schwenklager am Y-Schlitten angeordnet. Dies umfasst einen Schwenkantrieb für die Schwenkbewegung. Auf diese Weise kann der primäre Werkstückhalter zwischen der Übergabeorientierung und anderen Orientierungen verschwenkt werden.

Gemäß einer weiteren beispielhaften Ausgestaltung umfasst das Gestell einen Gestellblock, wobei der Y-Schlitten an einer Y-Führung des Gestellblocks, insbesondere an einer Unterseite des Gestellblocks, translatorisch verfahrbar gelagert ist. Auf diese Weise ergibt sich eine kompakte und gleichermaßen hochsteife Gestaltung.

Gemäß einer weiteren beispielhaften Ausgestaltung ist der X-Schlitten an einer X-Führung des Gestellblocks, insbesondere an einer Schrägseite des Gestellblocks, translatorisch verfahrbar gelagert, wobei der Z-Schlitten an einer Z-Führung des X-Schlittens vertikal verfahrbar gelagert ist. Mit anderen Worten stellt also der Gestellblock die X-Führung und die Y-Führung bereit, wobei dies insgesamt bei nur sehr kompakten Abmessungen des Gestellblocks ermöglicht ist. Die Z-Führung sitzt auf der X-Führung, vergleichbar einem Kreuzschlitten. Insbesondere sitzt die Z-Führung an einer Vorderseite des X-Schlittens, die dem Arbeitsraum zugewandt ist. Die Vorderseite ist diejenige Seite, die einem Bediener zugewandt ist, der vor dem Arbeitsraum steht. Eine frontale Ebene wird hierbei durch eine horizontale Achse (X-Achse) und eine vertikale Achse (Z-Achse) gebildet.

Gemäß einer weiteren beispielhaften Ausgestaltung ist der Gestellblock als Schrägbett-Gestellblock gestaltet, wobei der Gestellblock an der Schrägseite die X-Führung und an der Unterseite die Y-Führung bereitstellt. Damit ergibt sich eine kompakte und steife Gestaltung. Der Gestellblock ist beispielsweise an einem Rahmen/Untergestell gelagert, der/das den Gestellblock teilweise umgibt. Die Schrägseite ist weder vertikal noch horizontal orientiert, sondern beispielsweise um einen Winkel von 30° bis 60° gegenüber der Horizontalen geneigt.

Gemäß einer weiteren beispielhaften Ausgestaltung ist in der Übergabeorientierung des primären Werkstückhalters ein gemeinsames Greifen des Werkstücks durch den primären Werkstückhalter und den sekundären Werkstückhalter ermöglicht.

Mit anderen Worten können der primäre Werkstückhalter und der sekundäre Werkstückhalter das Werkstück zumindest zeitweise gleichzeitig halten. Auf diese Weise kann das Werkstück zwischen dem primären Werkstückhalter und dem sekundären Werkstückhalter übergeben werden. Dies kann auch eine Bearbeitung in diesem Zustand (gleichzeitiges Halten durch den primären und den sekundären Werkstückhalter) umfassen, um ein Fertigteil von einem Reststück zu trennen. Das Fertigteil ist dann beispielsweise am sekundären Werkstückhalter gehalten, wobei das Reststück am primären Werkstückhalter gehalten ist.

Gemäß einer weiteren beispielhaften Ausgestaltung ist der sekundäre Werkstückhalter horizontal gegenüber der ersten rotatorischen Achse versetzt. Mit anderen Worten sitzt also der sekundäre Werkstückhalter beispielsweise seitlich neben dem primären Werkstückhalter. Damit ist das Werkstück gut für die Werkzeugspindel erreichbar, insbesondere wenn die Werkzeugspindel als hängende Spindel mit vertikaler Orientierung gestaltet ist.

Gemäß einer weiteren beispielhaften Ausgestaltung unterteilt eine Vertikalebene durch die erste rotatorische Achse den Arbeitsraum, wobei auf einer ersten Seite der Vertikalebene eine Rüstseite und einer davon abgewandten zweiten Seite der Vertikalebene eine Ladeseite ist, und wobei der sekundäre Werkstückhalter auf der Rüstseite oder der Ladeseite neben dem primären Werkstückhalter angeordnet ist.

Die Vertikalebene ist beispielhaft eine durch die Y-Achse verlaufende Vertikalebene. Dies dient in erster Linie zur Veranschaulichung und ist nicht einschränkend zu verstehen. Die Vertikalebene erlaubt eine gedankliche Unterteilung des Arbeitsraums in zwei Seiten, die beispielsweise auch als rechte Seite und linke Seite bezeichnet werden können. Beispielsweise erstreckt sich die Vertikalebene (und auch die Y-Achse) orthogonal zu einer Vorderseite der Werkzeugmaschine, die dem Bediener zugewandt ist, der die Werkzeugmaschine über eine frontseitige Zugangsöffnung betrachtet. Damit sind die Werkzeugspindel und der primäre Werkstückhalter und der sekundäre Werkstückhalter auf einer Rückseite des Arbeitsraums angeordnet. Somit ergibt sich für den Bediener ein guter Überblick. Die rechte und die linke Seite können für Rüstvorgänge und Ladevorgänge genutzt werden.

Wenn der sekundäre Werkstückhalter gegenüber dem primären Werkstückhalter seitlich (nach rechts oder links) versetzt ist, ist der Arbeitsraum der Werkzeugmaschine für den Bediener weiterhin gut einsehbar. Beispielhaft ist der primäre Werkstückhalter hinsichtlich seiner Höhenerstreckung (Z-Erstreckung) und/oder Tiefenerstreckung (Y-Erstreckung) derart gestaltet und positioniert, dass gleichwohl ein automatisiertes Rüsten (Werkzeugwechsel und dergleichen) und/oder ein automatisiertes Beladen und Entladen (Werkstückwechsel) ermöglicht ist. Beispielhaft kann ein Werkzeugwechsel und/oder ein Werkstückwechsel über den sekundären Werkstückhalter hinweg erfolgen. Damit können weiterhin die rechte Seite und die linke Seite des Arbeitsraums für das Beladen und etwaige Rüstvorgänge genutzt werden. Der Arbeitsraum bleibt weiterhin gut einsehbar.

Gemäß einer weiteren beispielhaften Ausgestaltung weist der sekundäre Werkstückhalter zumindest zwei Greifarme auf, um ein Werkstück zu fixieren, wobei die zumindest zwei Greifarme maschinenindividuell im montierten Zustand bearbeitet sind.

Auf diese Weise kann eine hochgenaue Ausrichtung zwischen dem sekundären Werkstückhalter und dem primären Werkstückhalter herbeigeführt werden. Die Greifarme des sekundären Werkstückhalters können im montierten Zustand an der Maschine bearbeitet werden. Auf diese Weise kann das Maschinenkoordinatensystem genutzt werden, dies erhöht die Präzision. Die Bearbeitung kann also maschinenspezifisch, genau zur Maschine passend erfolgen.

Gemäß einer weiteren beispielhaften Ausgestaltung ist die Werkzeugmaschine mit einer Steuereinrichtung versehen, die dazu ausgebildet ist, den primären Werkstückhalter in die Übergabeorientierung zu verschwenken, damit das Werkzeug zumindest zeitweise sowohl vom primären Werkstückhalter als auch vom sekundären Werkstückhalter gehalten ist, wobei das Werkstück durch die Werkzeugspindel bearbeitet wird, so dass ein Fertigteil, das am sekundären Werkstückhalter gehalten ist, und ein Reststück, das am primären Werkstückhalter gehalten ist, erzeugbar sind, und wobei der primäre Werkstückhalter aus der Übergabeorientierung heraus verschwenkbar ist, wenn das Werkstück vom Reststück getrennt ist.

Auf diese Weise kann nämlich der primäre Werkstückhalter in eine günstige Position verschwenkt werden, so dass das Fertigteil und das Reststück aus dem Arbeitsraum herausgeführt werden können. Insbesondere kann das Fertigteil durch Handhabungstechnik gegriffen und über eine Ladeseite aus dem Arbeitsraum herausgeführt werden. Das Reststück kann in ähnlicher Weise durch Handhabungstechnik herausgeführt werden oder schwerkraftunterstützt nach unten fallen, wenn es vom primären Werkstückhalter gelöst ist.

Gemäß einem weiteren Aspekt bezieht sich die vorliegende Erfindung auf ein Verfahren zur Bearbeitung von Werkstücken, insbesondere zur Fertigbearbeitung, mit folgenden Schritten:
- Bereitstellung einer Werkzeugmaschine gemäß zumindest einer der hierin beschriebenen Ausgestaltungen,
- Beladen des Arbeitsraums der Werkzeugmaschine mit einem Werkstück, das zu bearbeiten ist,
- Fixieren des Werkstücks am primären Werkstückhalter,
- Bearbeiten des am primären Werkstückhalter fixierten Werkstücks in mehreren Achsen an mehreren Seiten, die für die Werkzeugspindel zugänglich sind,
- Verschwenken des primären Werkstückhalters in eine Übergabeorientierung,
- Greifen und Fixieren des Werkstücks am sekundären Werkstückhalter,
- Bearbeiten einer weiteren Seite des Werkstücks, und
- Entnehmen des Werkstücks aus dem Arbeitsraum der Werkzeugmaschine.

Auch auf diese Weise wird die der Offenbarung zugrundeliegende Aufgabe gelöst.

Auf diese Weise kann ein Werkstück unter Nutzung einer offenbarungsgemäßen Werkzeugmaschine an sechs Seiten bearbeitet werden. Dieser Vorgang kann auch als Fertigbearbeitung bezeichnet werden. Der Begriff Fertigbearbeitung schließt nicht aus, dass gegebenenfalls weitere Arbeitsschritte folgen. Jedoch kann beispielsweise eine sechsseitige spanende Bearbeitung vollständig innerhalb der Werkzeugmaschine durchgeführt werden. Dies betrifft insbesondere solche Arbeitsschritte, bei denen ein Werkstück definiert von einer Basis (einem Reststück) getrennt werden soll. Daher soll auch der Begriff Fertigteil nicht einschränkend verstanden werden, dieser ist vielmehr auf eine Bearbeitungsaufgabe bezogen, die eine Bearbeitung an einer zuvor nicht zugänglichen Seite in ein und derselben Werkzeugmaschine umfasst.

In einer beispielhaften Ausgestaltung umfasst das Verfahren das Lösen des Werkstücks vom primären Werkstückhalter vor der Bearbeitung der weiteren Seite.

In einer beispielhaften Ausgestaltung umfasst das Verfahren das Lösen des Werkstücks vom primären Werkstückhalter durch die Bearbeitung der weiteren Seite. Mit anderen Worten wird auf diese Weise das Werkstück (Fertigteil) von einem Reststück getrennt. Das Werkstück kann im primären Werkstückhalter verbleiben. Das Fertigteil ist vom Reststück getrennt und wird vom sekundären Werkstückhalter gehalten. Das Fertigteil kann sodann automatisiert entladen werden, etwa mittels Handhabungstechnik. Auch das Reststück kann automatisiert entladen werden, etwa mittels Handhabungstechnik. Das Reststück kann jedoch auch unter Nutzung der Schwerkraft nach unten entsorgt und abgeführt werden, wenn der primäre Werkstückhalter entsprechend verschwenkt wird.

Gemäß einer beispielhaften Ausgestaltung weist das Verfahren ferner Folgendes auf:
- Fixieren des Werkstücks sowohl am primären Werkstückhalter als auch am sekundären Werkstückhalter,
- Bearbeiten des Werkstücks, umfassend Trennen des vom sekundären Werkstückhalter gehaltenen Fertigteils von einem vom primären Werkstückhalter gehaltenen Reststück, und
- Abführen des Reststücks aus dem Arbeitsraum der Werkzeugmaschine.

Auf diese Weise kann das Werkstück in einem zweiseitig eingespannten Zustand bearbeitet werden. Durch das Trennen wird eine sechste Seite des Werkstücks bearbeitet, die bei Nutzung lediglich eines einzigen Werkstückhalters in einer 5-AchsMaschine nicht ohne weiteres bearbeitet werden kann.

Es ist natürlich auch vorstellbar, über das Trennen des Werkstücks vom Reststück hinausgehende Bearbeitungen durchzuführen, wenn das Werkstück im sekundären Werkstückhalter und zumindest zeitweise auch im primären Werkstückhalter fixiert ist. Wenn das Werkstück vom primären Werkstückhalter getrennt ist, kann der primäre Werkstückhalter bedarfsweise aus der Übergabeorientierung heraus verschwenkt werden, so dass eine gute Zugänglichkeit des im sekundären Werkstückhalter gehaltenen Werkstücks für weitere Bearbeitungen gegeben ist.

Es versteht sich, dass die offenbarungsgemäße Werkzeugmaschine und das offenbarungsgemäße Verfahren miteinander kombiniert werden können. Insbesondere eignet sich die offenbarungsgemäße Werkzeugmaschine zur Durchführung des offenbarungsgemäßen Verfahrens. Die offenbarungsgemäße Werkzeugmaschine und das offenbarungsgemäße Verfahren können gleichermaßen ausgestaltet sein. Daher können hierin beschriebenen Merkmale, die sich auf die Werkzeugmaschine beziehen, auch zur Weiterbildung des Verfahrens genutzt werden, und umgekehrt.

Beispielhaft weist die Werkzeugmaschine eine Steuereinrichtung auf, die dazu befähigt ist, die Werkzeugmaschine zu betreiben, um zumindest einige der offenbarungsgemäßen Verfahrensschritte abzuarbeiten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, die Erfindung wird aber von den Ansprüchen definiert.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine mit einem primären Werkstückhalter;
- Fig. 2:: eine auf Fig. 1 beruhende perspektivische Ansicht einer Werkzeugmaschine mit einem primären Werkstückhalter und einem sekundären Werkstückhalter;
- Fig. 3:: eine frontale Teilansicht der Werkzeugmaschine gemäß Fig. 2;
- Fig. 4:: eine weitere frontale Teilansicht einer Werkzeugmaschine mit einem primären Werkstückhalter und einem sekundären Werkstückhalter;
- Fig. 5:: eine auf Fig. 4 beruhende Ansicht, wobei der primäre Werkstückhalter verschwenkt ist;
- Fig. 6:: eine weitere frontale Teilansicht einer Werkzeugmaschine mit einem primären Werkstückhalter und einem sekundären Werkstückhalter;
- Fig. 7:: eine auf Fig. 6 beruhende Teilansicht einer Werkzeugmaschine in Draufsicht, zur Veranschaulichung einer Lösestellung des sekundären Werkstückhalters;
- Fig. 8:: eine auf Fig. 7 beruhende Ansicht zur Veranschaulichung einer Haltestellung des Werkstückhalters; und
- Fig. 9:: ein schematisches Blockdiagramm zur Veranschaulichung einer Ausgestaltung eines Verfahrens zur Bearbeitung von Werkstücken.

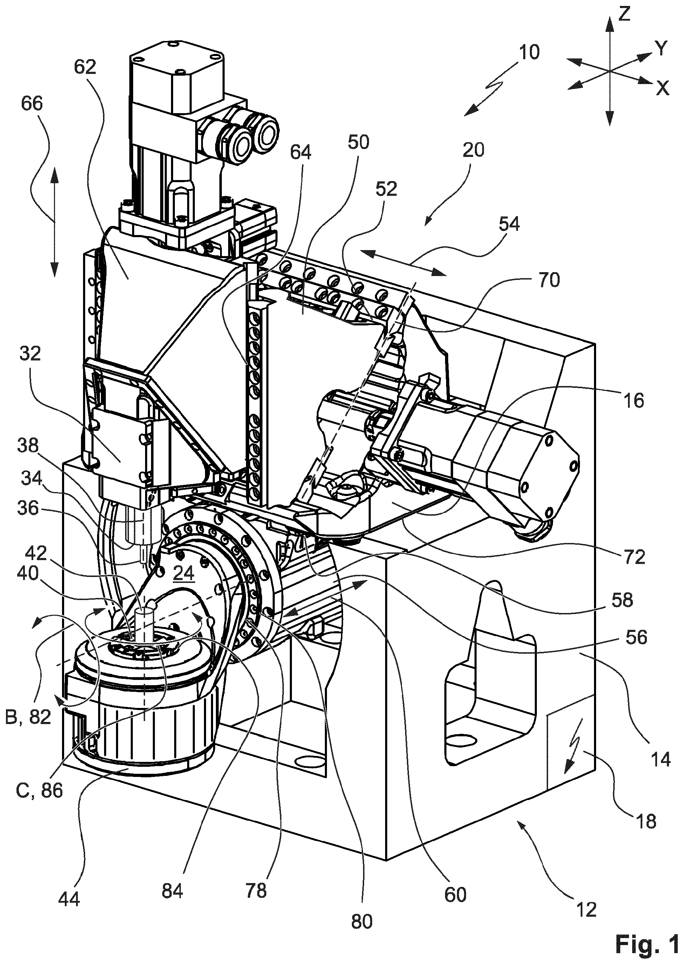

Fig. 1 veranschaulicht anhand einer perspektivischen Darstellung eine beispielhafte Ausgestaltung einer kompakt gestalteten Werkzeugmaschine 10, die sich zur Herstellung feinmechanischer Bauteile eignet. Die umfasst beispielsweise miniaturisierte Präzisionsteile aus der Medizintechnik. Die Werkzeugmaschine 10 umfasst ein Gestell 12, das im Ausführungsbeispiel eine Untergestell 14 umfasst, auf dem ein Gestellblock 16 gelagert ist. Wesentliche Kräfte, die bei der Bearbeitung entstehen, werden vom Gestellblock 16 aufgenommen. Das Untergestell 14 dient als Auflage für den Gestellblock 16. Das Untergestell 14 kann zur Auflage auf einem Untergrund dienen. Das Untergestell 14 kann jedoch auch an oder in einem weiteren Gestell/Rahmen platziert werden, dies bietet sich insbesondere bei besonders kompakt gestalteten Werkzeugmaschinen an.

In Fig. 1 ist ferner mit 18 eine Steuereinrichtung der Werkzeugmaschine 10 angedeutet. Die Steuereinrichtung 18 steuert Komponenten und Funktionen der Werkzeugmaschine 10, um Werkstücke in der gewünschten Weise zu bearbeiten. Auch eine Steuerung über externe Einrichtungen ist vorstellbar.

Die Werkzeugmaschine 10 umfasst ferner eine Kinematik 20, die als Mehrachs-Kinematik gestaltet ist. In zumindest einigen der Figuren ist aus Veranschaulichungsgründen ein kartesisches Koordinatensystem X-Y-Z angezeigt. Das Koordinatensystem X-Y-Z umfasst eine X-Achse (Seitenrichtung), eine Y-Achse (Tiefenrichtung), und eine Z-Richtung (Höhenrichtung). Die X-Achse und die Y-Achse sind im Ausführungsbeispiel horizontale Achsen. Die Z-Achse ist im Ausführungsbeispiel eine vertikale Achse. Die Achsen X-Y-Z stehen orthogonal aufeinander. Das Koordinatensystem X-Y-Z dient in erster Linie zur Veranschaulichung und Beschreibung von Komponenten und Funktionen der Werkzeugmaschine 10. Es versteht sich, dass zu diesen Zwecken auch andere Koordinatensysteme verwendbar sind. Das Koordinatensystem X-Y-Z ist daher nicht einschränkend zu verstehen. Der Fachmann kann die erforderlichen gedanklichen Schritte zur Überführung in andere Koordinatensysteme ohne weiteres durchführen.

Die Kinematik 20 umfasst im Ausführungsbeispiel verschiedene Bauteile, die mittelbar oder unmittelbar am Gestellblock 16 gelagert sind. Dies sorgt für kurze Kraftwege und eine hohe Steifigkeit. In Fig. 1 ist ferner mit 24 ein Arbeitsraum angedeutet, in dem die Bearbeitung mit der Werkzeugmaschine 10 stattfindet. Die Werkzeugmaschine 10 umfasst ferner eine Werkzeugspindel 32 mit einem Werkzeughalter 34 zur Aufnahme eines Werkzeugs 36, das bedarfsweise um eine Längsachse 38 der Werkzeugspindel 32 antreibbar ist.

Zur Aufnahme und Fixierung von zu bearbeitenden Werkstücken 42 dient ein Werkstückhalter 40, der als primärer Werkstückhalter bezeichnet wird. Der primäre Werkstückhalter 40 ist an einem Ausleger 44 aufgenommen. Im Ausführungsbeispiel gemäß Fig. 1 ist der Ausleger 44 translatorisch und rotatorisch relativ zum Gestell 12 bzw. zu dessen Gestellblock 16 verfahrbar.

Die Werkzeugmaschine 10 umfasst einen X-Schlitten 50, der an einer X-Führung 52 am Gestellblock 16 gelagert ist. Der X-Schlitten 50 ist entlang einer horizontalen Achse 54 (vergleiche auch die X-Achse) translatorisch verfahrbar. Zu diesem Zweck ist ein Antrieb vorgesehen. Am X-Schlitten 50 ist ein Z-Schlitten 62 entlang einer Z-Führung 64 in einer vertikalen Achse 66 (vergleiche auch die Z-Achse) translatorisch verfahrbar angeordnet. Zu diesem Zweck ist ein geeigneter Antrieb vorgesehen. Der Z-Schlitten 62 trägt die Werkzeugspindel 32. Die Werkzeugmaschine 10 umfasst ferner einen Y-Schlitten 56, der an einer Y-Führung 58 am Gestellblock 16 gelagert ist. Der Y-Schlitten 56 ist entlang einer horizontalen Achse 60 (vergleiche auch die Y-Achse) translatorisch verfahrbar angeordnet. Zu diesem Zweck ist ein geeigneter Antrieb vorgesehen. Der Y-Schlitten 56 trägt den Ausleger 44 und damit den primären Werkstückhalter 40.

Bei der Werkzeugmaschine 10 gemäß Fig. 1 werden die Bewegungen in der X-Achse und in der Z-Achse über eine Bewegung der Werkzeugspindel 32 relativ zum Gestellblock 16 erzeugt. Die Bewegungen in der Y-Achse werden über eine Bewegung des primären Werkstückhalters 40 relativ zum Gestellblock 16 erzeugt. Auf diese Weise werden drei translatorische Achsen X, Y, Z bereitgestellt.

Der Gestellblock 16 ist kompakt gestaltet. An einer Schrägseite 70 ist die X-Führung 52 angeordnet. An einer Unterseite 72 ist die Y-Führung 58 angeordnet. Dies führt aufgrund kurzer Wege zu einer hohen Steifigkeit. Bei kompakt gestalteten Werkzeugmaschinen sind die Verfahrwege entlang der X-Achse, der Y-Achse und der Z-Achse nicht übermäßig groß, so dass sich insgesamt eine hohe Steifigkeit und Positioniergenauigkeit ergibt.

Der primäre Werkstückhalter 40 ist über ein Schwenklager 78 schwenkbar am/im Y-Schlitten 56 gelagert. An seiner dem Arbeitsraum 24 zugewandten Stirnseite weist der Y-Schlitten 56 einen Halteflansch 80 auf, an dem auch weitere Komponenten befestigt werden können. Das Schwenklager 78 erlaubt eine Schwenkbewegung des primären Werkstückhalters 40 um eine Schwenkachse 82, die auch als B-Achse bezeichnet werden kann. Im Ausführungsbeispiel gemäß Fig. 1 ist die B-Achse parallel zur Y-Achse. Die B-Achse beschreibt Rotationsbewegungen um die Y-Achse.

Ferner weist der Ausleger 44 ein Drehlager 84 für den primären Werkstückhalter 40 auf, der Drehbewegungen des Werkstücks 42 um eine Drehachse 86 erlaubt, die auch als C-Achse bezeichnet werden kann. In der Konfiguration gemäß Fig. 1 ist die C-Achse (Achse 86) parallel zur Z-Achse. Diese Zuordnung ist jedoch nicht fix, sondern abhängig von einer aktuellen Schwenkposition des primären Werkstückhalters 40 um die B-Achse.

Insgesamt erlaubt also die in Fig. 1 gezeigte Werkzeugmaschine 10 eine Bearbeitung des Werkstücks 42 in fünf Achsen, umfassend drei translatorische Achsen X, Y und Z sowie zwei rotatorische Achsen B und C. Werkstücke 42 können jedoch an derjenigen Seite, mit der sie im primären Werkstückhalter 40 befestigt und eingespannt sind, nicht oder nur unzureichend bearbeitet werden.

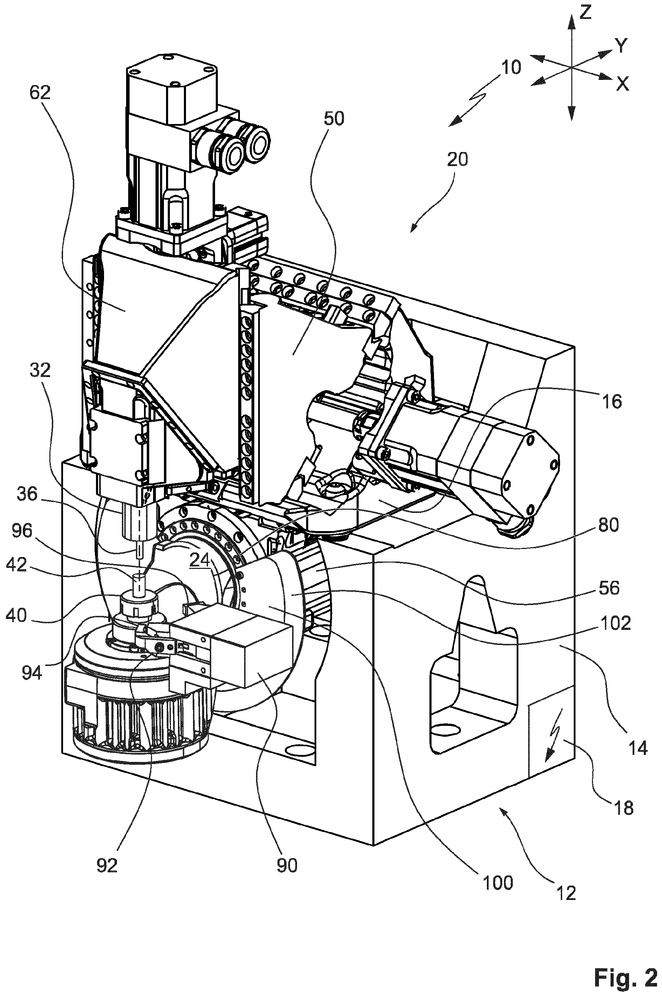

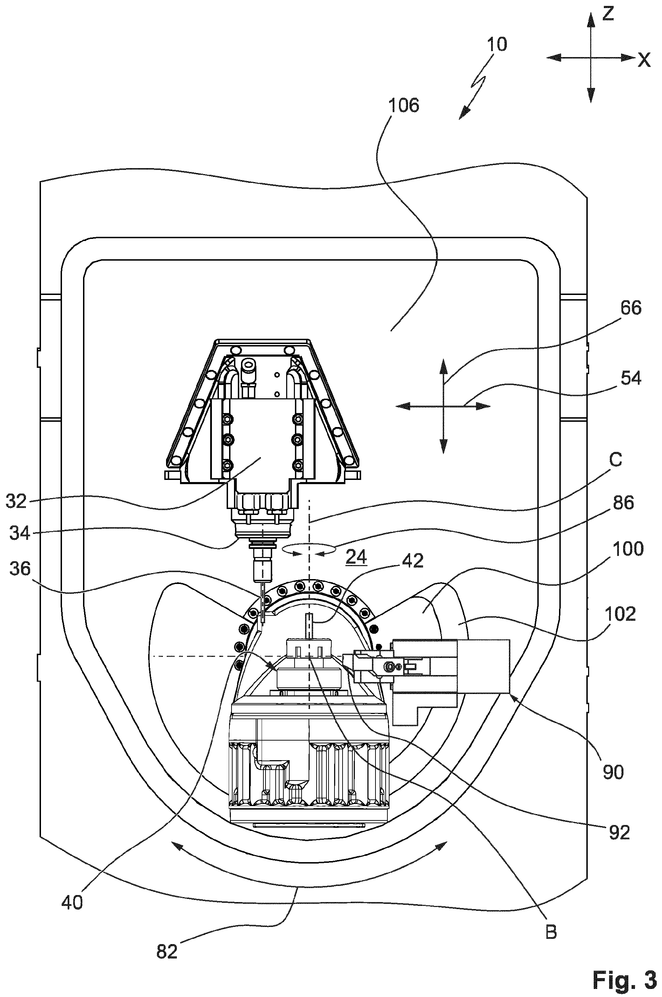

Zu diesem Zweck wird vorgeschlagen, die bereits anhand Fig. 1 veranschaulichte Werkzeugmaschine um einen sekundären Werkstückhalter 90 zu ergänzen, vergleiche auch Fig. 2 und Fig. 3. Fig. 2 basiert auf der Darstellung und Konfiguration der Werkzeugmaschine 10 gemäß Fig. 1. Daher wird nachfolgend in erster Linie auf Unterschiede/Ergänzungen eingegangen.

In der ergänzten Konfiguration gemäß Fig. 2 weist die Werkzeugmaschine 10 zwei Werkstückhalter auf, den primären Werkstückhalter 40 sowie den sekundären Werkstückhalter 90. Wie vorstehend bereits dargelegt, erlaubt der primäre Werkstückhalter 40 eine Bearbeitung eines dort eingespannten Werkstücks 42 mit dem Werkzeugs 36 der Werkzeugspindel 32 in fünf Achsen. Zusätzlich ist nun jedoch im Bauraum 24 der sekundäre Werkstückhalter 90 vorgesehen, der im Ausführungsbeispiel einen Greifer 92 mit zwei Greifarmen 94, 96 aufweist.

In der in Fig. 2 gezeigten Konfiguration ist der sekundäre Werkstückhalter 90 noch nicht im Eingriff mit dem Werkstück 42. Das Werkstück 42 ist im Ausführungsbeispiel ausschließlich durch den primären Werkstückhalter 40 gehalten. Der sekundäre Werkstückhalter 90 ist im Arbeitsraum 24 seitlich neben dem primären Werkstückhalter 40 angeordnet. Auf diese Weise ist das Werkstück 92 in der gezeigten vertikalen Orientierung des primären Werkstückhalters 40 gut für das Werkzeug 36 der Werkzeugspindel 32 zugänglich.

Der sekundäre Werkstückhalter 90 ist an einem Halter 100 festgelegt, der am Halteflansch 80 befestigt ist. Mit anderen Worten kann also der sekundäre Werkstückhalter 90 gemeinsam mit dem primären Werkstückhalter 40 entlang der Y-Achse (vergleiche die Achse 60 in Fig. 1) relativ zum Gestellblock 16 translatorisch verfahren werden. Die Y-Positionen des sekundären Werkstückhalters 90 und des primären Werkstückhalters 40 sind im Ausführungsbeispiel identisch bzw. zueinander unveränderlich. Der Halter 100 wird insbesondere dann nicht bewegt, wenn der Werkstückhalter 40 um die B-Achse (vergleiche Achse 82 in Fig. 1) verschwenkt wird. Auf diese Weise kann eine Relativbewegung zwischen dem primären Werkstückhalter 40 und dem sekundären Werkstückhalter 90 stattfinden. Es handelt sich um eine Schwenkbewegung.

Diese Schwenkbewegung des primären Werkstückhalters 40 kann genutzt werden, um Werkstücke 42 in einer Übergabeorientierung des primären Werkstückhalters 40 mit dem sekundären Werkstückhalter 90 zu greifen und zu fixieren. Im Ausführungsbeispiel gemäß Fig. 2 ist der sekundäre Werkstückhalter 90 nicht zu einer Schwenkbewegung (vergleiche B-Achse und C-Achse) im Sinne einer Positionierbewegung befähigt. Hierbei sind naturgemäß etwaige Bewegungen der Greifarme 94, 96 zum Öffnen und Schließen des Greifers 92 unberücksichtigt.

Am Halteflansch 80 ist im Ausführungsbeispiel gemäß Fig. 2 ferner ein Schutzkragen 102 befestigt, der eine rückwärtige Abdeckung 106 (vergleiche Fig. 3) des Arbeitsraums 24 vor übermäßigen Späneeintrag, KSS (Kühlschmierstoffe) und dergleichen schützt. Der Halteflansch 80 ist nicht um die B-Achse rotierbar. Der Halteflansch 80 sitzt drehfest auf der B-Achse. Der Halteflansch 80 kann gemeinsam mit dem Y-Schlitten 56 entlang der Y-Achse translatorisch verfahren werden. Dies gilt auch für den primären Werkstückhalter 40 und den sekundären Werkstückhalter 90.

Fig. 3 zeigt eine frontale Ansicht des Arbeitsraums 24. Diese Ansicht ist beispielsweise diejenige, die sich für einen Bediener der Werkzeugmaschine 10 ergibt, der die Werkzeugmaschine 10 frontal betrachtet.

Die Abdeckung 106 grenzt das rückwärtige Ende des Arbeitsraums 24 ab, so dass beispielsweise die Schlitten 50, 56, 62 sowie die zugehörigen Führungen 52, 58, 64 geschützt sind. Die Abdeckung 106 wird zusätzlich durch den Schutzkragen 102 geschützt, der der Abdeckung 106 in Richtung auf den Arbeitsraum 24 vorgelagert ist. Der Schutzkragen 102 umgibt zumindest abschnittsweise eine Rückseite des primären Werkstückhalters 40 bzw. des Auslegers 44.

In der frontalen Ansicht gemäß Fig. 3 ist die Werkzeugspindel 32 in der Ansichtsebene verfahrbar, vergleiche die horizontale Achse 54 (X-Richtung) und die vertikale Achse 66 (Z-Richtung). Der primäre Werkstückhalter 40 und der sekundäre Werkstückhalter 90 können gemeinsam orthogonal zur Ansichtsebene (in der Y-Richtung) verfahren werden. Der sekundäre Werkstückhalter 90 ist in den translatorischen Achsen X, Y und Z fix in Bezug auf den primären Werkstückhalter 40 angeordnet (soweit dessen Schwenkbewegungen um die B-Achse und die C-Achse unberücksichtigt bleiben).

Der sekundäre Werkstückhalter 90 ist seitlich neben dem primären Werkstückhalter 40 angeordnet. In der in Fig. 3 gezeigten (vertikalen) Orientierung des primären Werkstückhalters 40 ist die C-Achse parallel zur Z-Achse. In dieser Orientierung kann der sekundäre Werkstückhalter 90 das Werkstück 42 nicht greifen und halten. Damit also der sekundäre Werkstückhalter 90 das Werkstück 42 greifen und halten kann, muss der primäre Werkstückhalter 40 um die B-Achse verschwenkt werden, vergleiche den gekrümmten Doppelpfeil 82.

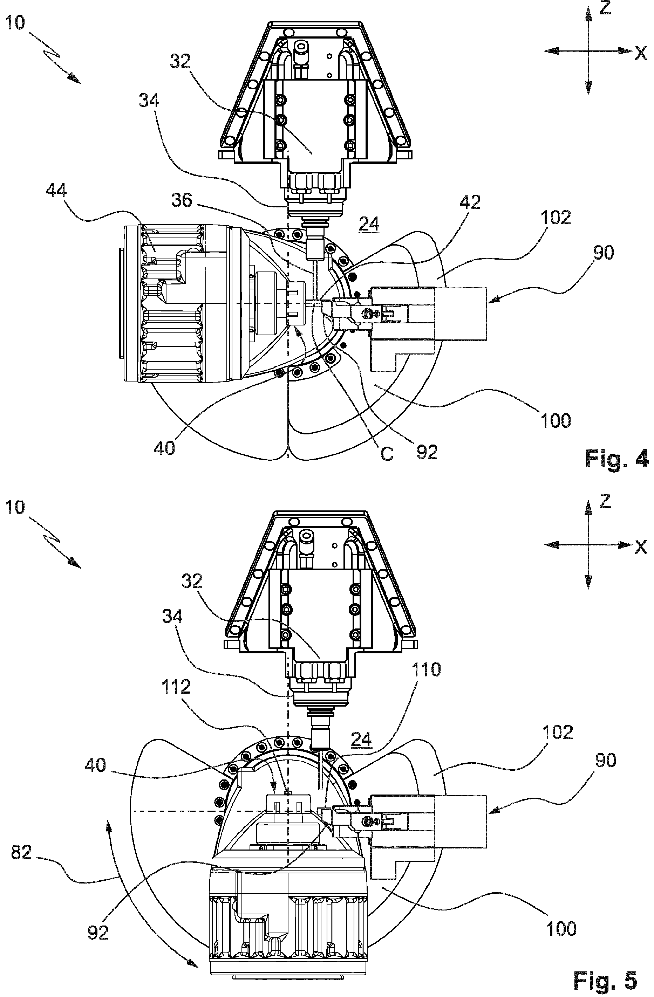

In der Detailansicht gemäß Fig. 4 ist ein derartiger Zustand gezeigt. Die Ansichtsebene ist in den Figuren 3 und 4 gleich, es handelt sich jeweils um eine frontale Ansicht. In Fig. 4 ist der primäre Werkstückhalter 40 gegenüber der in Fig. 3 gezeigten Orientierung um 90° (im Uhrzeigersinn in der Ansichtsebene) verschwenkt. Mit anderen Worten nimmt der primäre Werkstückhalter 40 in Fig. 4 eine horizontale Orientierung ein. Die C-Achse ist parallel zur X-Achse. Dies Orientierung kann auch als Übergabeorientierung des primären Werkstückhalters 40 bezeichnet werden. In der Übergabeorientierung kann der sekundäre Werkstückhaltern 90 mit seinem Greifer 92 (vergleiche die in Fig. 2 gezeigten Greifarme 94, 96) das Werkstück 42 greifen und halten.

Das Werkstück 42 kann in der in Fig. 4 gezeigten Konfiguration beispielsweise durch das Werkzeug 36 der Werkzeugspindel 32 getrennt werden, so dass ein Reststück im primären Werkstückhalter 40 und das fertige Werkstück 42 im sekundären Werkstückhalter 90 verbleibt. Das Werkstück 42 kann also aufgetrennt (zweigeteilt) werden. Dies erlaubt ferner eine Schwenkbewegung des primären Werkstückhalters 40 aus der in Fig. 4 gezeigten Übergabeorientierung heraus, obwohl ein Teil des Werkstücks 42 im sekundären Werkstückhalter 90 verbleibt. In Fig. 5 ist eine beispielhaft eine resultierende vertikale Orientierung des Werkstückhalters 40 gezeigt, vergleiche auch Fig. 3, vergleiche auch den gekrümmten Doppelpfeil 82 zur Veranschaulichung der Schwenkachse (B-Achse). Das nunmehr zweigeteilte Werkstück 42 liegt in Fig. 5 in Form eines Fertigteils 110 und eines Reststücks 112 vor. Das Fertigteil 110 wird vom sekundären Werkstückhalter 90 gehalten. Das Reststück 112 wird vom primären Werkstückhalter 40 gehalten.

Der Übergang von der in Fig. 4 gezeigten Konfiguration zu der in Fig. 5 gezeigten Konfiguration ist im Ausführungsbeispiel nur dann möglich, wenn das Werkstück 42 in der in Fig. 4 gezeigten Konfiguration aufgetrennt wird. Ohne diese Trennung würde das Werkstück 42 eine starre Verbindung zwischen dem primären Werkstückhalter 40 und dem sekundären Werkstückhalter 90 bewirken. Die Trennung des Werkstücks 42 öffnet diese starre Verbindung, so dass anschließend der primäre Werkstückhalter 40 relativ zum sekundären Werkstückhalter 90 verschwenkt werden kann. Sodann können das Fertigteil 110 und das Reststück 112 aus dem Arbeitsraum 24 herausgeführt werden, um den Arbeitsraum 24 zu entladen.

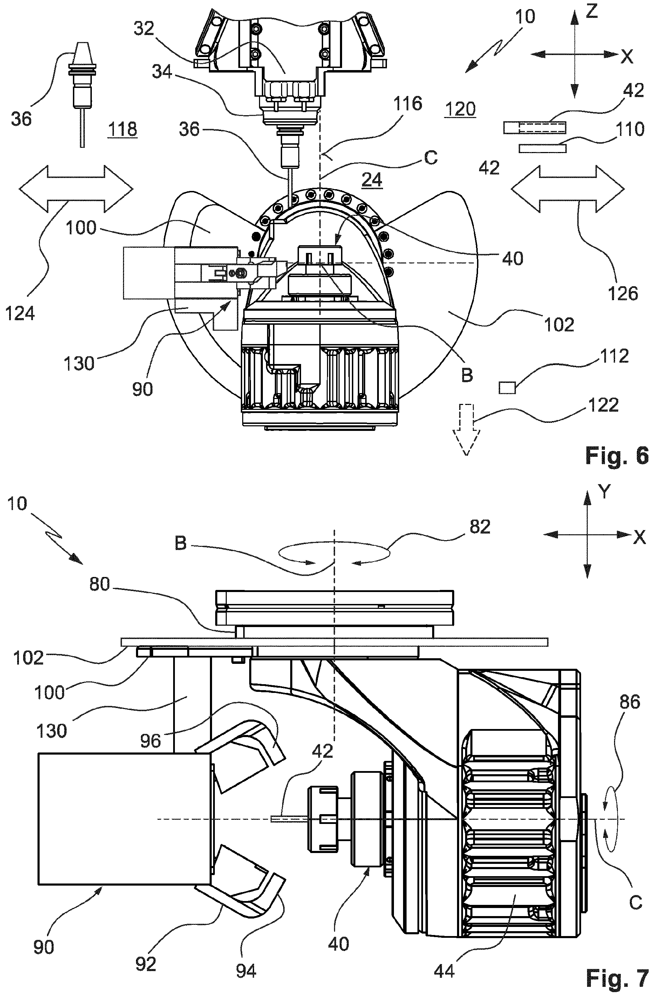

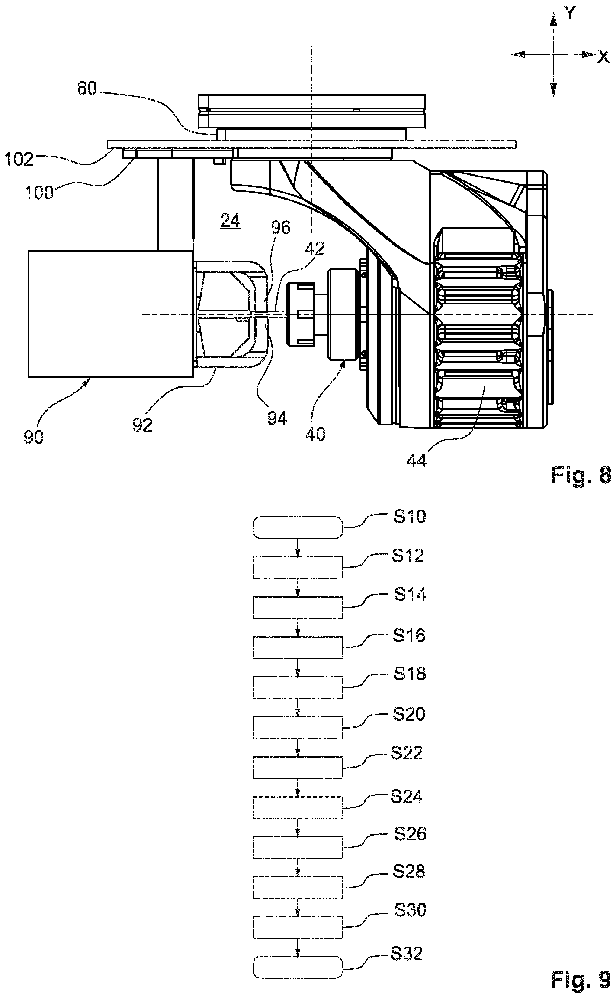

Fig. 6 veranschaulicht eine weitere Konfiguration der Werkzeugmaschine 10. Fig. 6 unterscheidet sich durch die Anordnung des sekundären Werkstückhalters 90 von der zuvor anhand der Figuren 2-5 veranschaulichten Konfiguration. Die Draufsichten der Figuren 7 und 8 greifen die in Fig. 6 gezeigte Konfiguration auf.

In Fig. 6 ist aus Veranschaulichungsgründen eine mit 116 bezeichnete Vertikalebene angedeutet, die die B-Achse schneidet. Im Ausführungsbeispiel schneidet die Vertikalebene 116 ferner die C-Achse. Die Vertikalebene 116 unterteilt den Arbeitsraum 24 beispielhaft in eine Rüstseite 118 und eine Ladeseite 120. In Fig. 6 ist der sekundäre Werkstückhalter 90 auf der Rüstseite 118 seitlich neben dem primären Werkstückhalter 40 angeordnet. Es ist grundsätzlich auch vorstellbar, den sekundären Werkstückhalter 90 auf der Ladeseite 120 seitlich neben dem primären Werkstückhalter 40 anzuordnen.

In der jeweiligen Ansicht gemäß den Figuren 2-5 ist der sekundäre Werkstückhalter 90 bei frontaler Betrachtung rechts neben dem primären Werkstückhalter 40 angeordnet. In der jeweiligen Ansicht gemäß den Figuren 6-8 ist der sekundäre Werkstückhalter 90 bei frontaler Betrachtung links neben dem primären Werkstückhalter 40 angeordnet. Beide Varianten sind grundsätzlich vorstellbar.

Die Rüstseite 118 ist diejenige Seite, über die Werkzeuge 36 gewechselt werden können, vergleiche einen Blockpfeil 124, der den Rüstvorgang veranschaulicht. Die Ladeseite 120 ist diejenige Seite, auf der die Werkzeugmaschine 10 mit zu bearbeitenden Werkstücken 42 bestückt (beladen) werden kann. Ferner können über die Ladeseite 120 Fertigteile 110 abgeführt (entladen) werden. Ein mit 126 bezeichneter Blockpfeil veranschaulicht den Ladevorgang.

Grundsätzlich kann über die Ladeseite 120 auch eine Abführung der Reststücke 112 erfolgen. In der Ausgestaltung gemäß Fig. 6 veranschaulicht jedoch ein mit 122 bezeichneter Pfeil als alternative Lösung ein Abführen der Reststücke 112 nach unten. Dies kann beispielsweise dadurch bewirkt werden, dass der primäre Werkstückhalter 40, bei dem das Reststück 112 verbleibt, um die B-Achse in eine über Überkopf-Orientierung oder Nahezu-Überkopf-Orientierung verschwenkt wird, so dass Reststücke 112 gelöst werden und schwerkraftunterstützt herausfallen können. Auf diese Weise kann die Werkzeugmaschine 10 teilautomatisiert oder vollautomatisiert betrieben werden.

Fig. 7 und Fig. 6 veranschaulichen ferner einen Arm 130, über den der sekundäre Werkstückhalter 90 fest am Halter 100 sowie am Halteflansch 80 des Y-Schlittens 56 (vergleiche Fig. 2) befestigt ist.

Aus den Draufsichten der Figuren 7 und 8 ergeht, dass der sekundäre Werkstückhalter 90 als solches weder in der X-Richtung noch in der Y Richtung oder der Z-Richtung gegenüber dem primären Werkstückhalter 40 (bzw. der B-Achse) verfahrbar ist. Daher kann der sekundäre Werkstückhalter 90 ohne eigene Verfahrantriebe auskommen.

Die Figuren 7 und 8 veranschaulichen ferner eine Lösestellung (Fig. 7) und einer Haltestellung (Fig. 8) des sekundären Werkstückhalters 90. In der Lösestellung sind die Greifarme 94, 96 des Greifers 92 geöffnet. Idealerweise verbleibt so viel Abstand zum Werkstück 42, dass dieses einfach mit dem Werkzeug 36 der Werkzeugspindel 32 (vergleiche Fig. 6) bearbeitet werden kann. In Fig. 8 sind die Greifarme 94, 96 des Greifers 92 geschlossen. Ferner ist der primäre Werkstückhalter 40 in die Übergabeorientierung verbracht wurden, so dass das am primären Werkstückhalter aufgenommene Werkstück 42 für die Greifarme 94, 96 erreichbar ist, um das Werkstück 42 zu halten und zu fixieren.

In der in Fig. 8 gezeigten Konfiguration kann grundsätzlich eine Trennung des Werkstücks 42 in zwei Teile erfolgen, vergleiche hierzu auch die bereits zuvor anhand der Figuren 4 und 5 veranschaulichte Bearbeitung.

Für eine hochgenaue Positionierung und Ausrichtung können Kontaktflächen der Greifarme 94, 96 gezielt bearbeitet werden, wenn der sekundäre Werkstückhaltern 90 mit dem Greifer 92 bereits fest an der Werkzeugmaschine 10 verbaut ist. Beispielsweise ist eine Bearbeitung in der in Fig. 8 gezeigten Haltestellung vorstellbar. Auf diese Weise können etwaige Montagetoleranzen und/oder Bearbeitungstoleranzen weitgehend minimiert werden. Das Werkstück 42 kann hochgenau vom primären Werkstückhalter 40 und gleichzeitig vom sekundären Werkstückhalter 90 gehalten werden. Der primäre Werkstückhalter 40 und der sekundäre Werkstückhalter 90 sind hochgenau zueinander ausgerichtet.

Mit Bezugnahme auf Fig. 9 wird anhand eines vereinfachten schematischen Blockdiagramms eine beispielhafte Ausgestaltung eines Verfahrens zur Bearbeitung von Werkstücken veranschaulicht, insbesondere zur Fertigbearbeitung. Das Verfahren beginnt im Ausführungsbeispiel in einem Schritt S10 und endet in einem Schritt S32.

Das Verfahren umfasst einen Schritt S12, der die Bereitstellung einer Werkzeugmaschine gemäß zumindest einer der hierin beschriebenen Ausgestaltungen umfasst. Insbesondere ist die Werkzeugmaschine mit einem primären Werkstückhalter und einem sekundären Werkstückhalter ausgestattet.

In einem Schritt S14 wird die Werkzeugmaschine zur Bearbeitung mit zumindest einem zu bearbeitenden Werkstück beladen. Es schließt sich ein Schritt S16 an, der eine Aufnahme und Fixierung des Werkstücks am primären Werkstückhalter umfasst. Auf diese Weise kann das Werkstück in einem Schritt S18 in seinem am primären Werkstückhalter eingespannten Zustand mehrachsig bearbeitet werden, beispielsweise durch 5-Achs-Bearbeitung oder 4-Achs-Bearbeitung. Zu diesem Zweck erlaubt die Werkzeugmaschine translatorische und rotatorische Relativbewegungen zwischen dem primären Werkstückhalter und einer Werkzeugspindel.

In einem weiteren Schritt S20 wird der primäre Werkstückhalter in eine Übergabeorientierung verschwenkt, in der es dem sekundären Werkstückhalter ermöglicht ist, das Werkstück zu greifen. Demgemäß erfolgt im Schritt S22 ein Greifen und Fixieren des Werkstücks durch den sekundären Werkstückhalter, insbesondere durch einen Greifer des sekundären Werkstückhalters.

In einem optionalen Schritt S24 folgt auf den Schritt S22 ein Lösen des Werkstücks vom primären Werkstückhalter. Der Schritt S24 ist jedoch lediglich optional. Es sind auch Ausgestaltungen vorstellbar, bei denen das Werkstück zumindest zeitweise während der Bearbeitung sowohl am primären Werkstückhalter als auch am sekundären Werkstückhalter gehalten und fixiert ist.

In einem Schritt S26 erfolgt eine Bearbeitung des Werkstücks in einem zumindest teilweise am sekundären Werkstückhalter fixierten Zustand. Der Schritt S26 kann beispielhaft ein Trennen eines Fertigteils von einem Reststück durch spanende Bearbeitung umfassen, dies erfolgt in einem (optionalen) Schritt S28. Auf diese Weise kann etwa das Reststück beim primären Werkstückhalter und das Fertigteil beim sekundären Werkstückhalter verbleiben. Somit kann eine sechste Seite des Werkstücks bearbeitet werden, die in einem ausschließlich im primären Werkstückhalter eingespannten Zustand nicht bearbeitet werden kann. Grundsätzlich kann der Schritt S26 auch andere Bearbeitungsvorgänge umfassen, die nicht notwendigerweise zu einem Trennen des Werkstücks führen, bei denen aber die Einspannung im sekundären Werkstückhalter genutzt wird.

Es schließt sich ein Schritt S30 an, der eine Entnahme des Werkstücks aus dem Arbeitsraum umfasst. Dies kann grundsätzlich auch eine Entnahme eines von einem Reststück separierten Fertigteils und/oder ein Abführen des Reststücks umfassen. Der Schritt S32 beschließt dem Bearbeitungsvorgang.

## Patentansprüche

1. Werkzeugmaschine (10) für die Fertigbearbeitung von Werkstücken (42), die Folgendes aufweist:
- ein Gestell (12),
- eine Werkzeugspindel (32) mit einem Werkzeughalter (34) zur Aufnahme eines Werkzeugs (36),
- einen primären Werkstückhalter (40) zur Aufnahme eines Werkstücks (42), und
- einen sekundären Werkstückhalter (90),
wobei die Werkzeugspindel (32) und der primäre Werkstückhalter (40) in zumindest drei translatorischen Achsen (X, Y, Z) und zumindest einer rotatorischen Achse (B) relativ zueinander verfahrbar sind, um in einem Arbeitsraum (24) ein am primären Werkstückhalter (40) aufgenommenes Werkstück (42) zu bearbeiten, wobei der sekundäre Werkstückhalter (90) in zumindest einer translatorischen Achse (X, Y, Z) relativ zum primären Werkstückhalter (40) fixiert ist,
wobei der primäre Werkstückhalter (40) in eine Übergabeorientierung verschwenkbar ist, in der ein Greifen des Werkstücks (42) durch den sekundären Werkstückhalter (90) ermöglicht ist, **dadurch gekennzeichnet, dass** der primäre Werkstückhalter (40) über ein Schwenklager (78) um die rotatorische Achse (B) schwenkbar an einem relativ zur Werkzeugspindel (32) translatorisch verfahrbaren Y-Schlitten (56) gelagert ist,
der Y-Schlitten (56) einen Halteflansch (80) aufweist, der hinsichtlich der rotatorischen Achse (B) drehfest angeordnet ist, und
der sekundäre Werkstückhalter (90) am Halteflansch (80) befestigt ist.

2. Werkzeugmaschine (10) nach Anspruch 1, wobei die Werkzeugspindel (32) vertikal orientiert ist, wobei der primäre Werkstückhalter (40) zwischen einer vertikalen Orientierung und einer horizontalen Orientierung verschwenkbar ist, und wobei der primäre Werkstückhalter (40) in der Übergabeorientierung horizontal orientiert ist.

3. Werkzeugmaschine (10) nach Anspruch 1 oder 2, wobei der primäre Werkstückhalter (40) ferner um eine zweite rotatorische Achse (C) rotierbar ist, wobei die zweite rotatorische Achse (C) in einer vertikalen Orientierung des primären Werkstückhalters (40) parallel zur Werkzeugspindel (32) orientiert ist, und wobei die zweite rotatorische Achse (C) in der Übergabeorientierung des primären Werkstückhalters (40) horizontal orientiert ist.

4. Werkzeugmaschine (10) nach einem der Ansprüche 1-3, aufweisend:
- einen X-Schlitten (50), der in einer ersten horizontalen Richtung (54) translatorisch verfahrbar ist,
- den Y-Schlitten (56), der in einer zweiten horizontalen Richtung (60) translatorisch verfahrbar ist, und
- einen Z-Schlitten (62), der in einer vertikalen Richtung (66) translatorisch verfahrbar ist,
wobei der primäre Werkstückhalter (40) und der sekundäre Werkstückhalter (90) an einem gemeinsamen Y-Schlitten (56) angeordnet sind.

5. Werkzeugmaschine (10) nach Anspruch 4, wobei der primäre Werkstückhalter (40) mittelbar über das Schwenklager (78) am Y-Schlitten (56) angeordnet ist.

6. Werkzeugmaschine (10) nach Anspruch 4 oder 5, wobei das Gestell (12) einen Gestellblock (16) umfasst, und wobei der Y-Schlitten (56) an einer Y-Führung (58) des Gestellblocks (16), insbesondere an einer Unterseite (72) des Gestellblocks (16), translatorisch verfahrbar gelagert ist.

7. Werkzeugmaschine (10) nach Anspruch 6, wobei der X-Schlitten (50) an einer X-Führung (52) des Gestellblocks (16), insbesondere an einer Schrägseite (70) des Gestellblocks (16), translatorisch verfahrbar gelagert ist, und wobei der Z-Schlitten an einer Z-Führung (64) des X-Schlittens (50) vertikal verfahrbar gelagert ist.

8. Werkzeugmaschine (10) nach Anspruch 7, wobei der Gestellblock (16) als Schrägbett-Gestellblock (16) gestaltet ist und an der Schrägseite (70) die X-Führung (52) und an der Unterseite (72) die Y-Führung (58) bereitstellt.

9. Werkzeugmaschine (10) nach einem der Ansprüche 1-8, wobei in der Übergabeorientierung des primären Werkstückhalters (40) ein gemeinsames Greifen des Werkstücks (42) durch den primären Werkstückhalter (40) und den sekundären Werkstückhalter (90) ermöglicht ist.

10. Werkzeugmaschine (10) nach einem der Ansprüche 1-9, wobei der sekundäre Werkstückhalter (90) horizontal gegenüber der ersten rotatorischen Achse (B) versetzt ist, und/oder wobei der sekundäre Werkstückhalter (90) einen Greifer (92) umfasst, der in einer Haltestellung zum Halten des Werkstücks (42) und in einer Lösestellung zur Freigabe des Werkstücks (42) betreibbar ist.

11. Werkzeugmaschine (10) nach einem der Ansprüche 1-10, wobei eine Vertikalebene (116) durch die erste rotatorische Achse (B) den Arbeitsraum (24) unterteilt, wobei auf einer ersten Seite der Vertikalebene (116) eine Rüstseite (118) und einer davon abgewandten zweiten Seite der Vertikalebene (116) eine Ladeseite (120) ist, und wobei der sekundäre Werkstückhalter (90) auf der Rüstseite (118) oder der Ladeseite (120) neben dem primären Werkstückhalter (40) angeordnet ist.

12. Werkzeugmaschine (10) nach einem der Ansprüche 1-11, wobei der sekundäre Werkstückhalter (90) zumindest zwei Greifarme (94, 96) aufweist, um ein Werkstück (42) zu fixieren, und wobei die zumindest zwei Greifarme maschinenindividuell im montierten Zustand (94, 96) bearbeitet sind.

13. Werkzeugmaschine (10) nach einem der Ansprüche 1-12, ferner aufweisend eine Steuereinrichtung (18), die dazu ausgebildet ist, den primären Werkstückhalter (40) in die Übergabeorientierung zu verschwenken, damit das Werkstück (42) zumindest zeitweise sowohl vom primären Werkstückhalter (40) als auch vom sekundären Werkstückhalter (90) gehalten ist, wobei das Werkstück (42) durch die Werkzeugspindel (32) bearbeitet wird, so dass ein Fertigteil (110), das am sekundären Werkstückhalter (90) gehalten ist, und ein Reststück (112), das am primären Werkstückhalter (40) gehalten ist, erzeugbar sind, und wobei der primäre Werkstückhalter (40) aus der Übergabeorientierung heraus verschwenkbar ist, wenn das Fertigteil (110) vom Reststück (112) getrennt ist

14. Verfahren zur Bearbeitung von Werkstücken (42), insbesondere zur Fertigbearbeitung, mit folgenden Schritten:
- Bereitstellung einer Werkzeugmaschine (10) nach einem der Ansprüche 1-13,
- Beladen des Arbeitsraums (24) der Werkzeugmaschine (10) mit einem Werkstück (42), das zu bearbeiten ist,
- Fixieren des Werkstücks (42) am primären Werkstückhalter (40),
- Bearbeiten des am primären Werkstückhalter (40) fixierten Werkstücks (42) in mehreren Achsen (X, Y, Z, B, C) an mehreren Seiten, die für die Werkzeugspindel (32) zugänglich sind,
- Verschwenken des primären Werkstückhalters (40) in eine Übergabeorientierung,
- Greifen und Fixieren des Werkstücks (42) am sekundären Werkstückhalter (90),
- Bearbeiten einer weiteren Seite des Werkstücks (42), und
- Entnehmen des Werkstücks (42) aus dem Arbeitsraum (24) der Werkzeugmaschine (10).

15. Verfahren nach Anspruch 14, ferner aufweisend:
- Fixieren des Werkstücks (42) sowohl am primären Werkstückhalter (40) als auch am sekundären Werkstückhalter (90),
- Bearbeiten des Werkstücks (42), umfassend Trennen eines vom sekundären Werkstückhalter (90) gehaltenen Fertigteils (110) von einem vom primären Werkstückhalter (40) gehaltenen Reststück (112), und
- Abführen des Reststücks (112) aus dem Arbeitsraum (24) der Werkzeugmaschine (10).

## Claims

1. A machine tool (10) for complete machining of workpieces (42), comprising:
- a frame (12),
- a tool spindle (32) comprising a tool holder (34) for receiving a tool (36),
- a primary workpiece holder (40) for receiving a workpiece (42), and
- a secondary workpiece holder (90),
wherein the tool spindle (32) and the primary workpiece holder (40) are movable relative to one another in at least three translatory axes (X, Y, Z) and at least one rotatory axis (B) in order to machine a workpiece (42) accommodated on the primary workpiece holder (40) in a working space (24), wherein the secondary workpiece holder (90) is fixed relative to the primary workpiece holder (40) in at least one translatory axis (X, Y, Z),
wherein the primary workpiece holder (40) is pivotable into a transfer orientation in which gripping of the workpiece (42) by the secondary workpiece holder (90) is made possible,
**characterized in that**
the primary workpiece holder (40) is mounted on a Y-carriage (56), which can be moved in translation relative to the tool spindle (32), via a pivot bearing (78) so that it can pivot about the rotational axis (B),
the Y-carriage (56) comprises a support flange (80) which is arranged in a rotationally fixed manner with respect to the rotational axis (B), and
the secondary workpiece holder (90) is attached to the support flange (80).

2. The machine tool (10) according to claim 1, wherein the tool spindle (32) is vertically oriented, wherein the primary workpiece holder (40) is pivotable between a vertical orientation and a horizontal orientation, and wherein the primary workpiece holder (40) is horizontally oriented in the transfer orientation.

3. The machine tool (10) according to claim 1 or 2, wherein the primary workpiece holder (40) is furthermore rotatable about a second rotational axis (C), wherein the second rotational axis (C) is oriented parallel to the tool spindle (32) in a vertical orientation of the primary workpiece holder (40), and wherein the second rotational axis (C) is oriented horizontally in the transfer orientation of the primary workpiece holder (40).

4. The machine tool (10) according to any one of claims 1-3, comprising:
- an X-carriage (50) which is translationally movable in a first horizontal direction (54),
- the Y-carriage (56), which is translationally movable in a second horizontal direction (60), and
- a Z-carriage (62) which is translationally movable in a vertical direction (66), wherein the primary workpiece holder (40) and the secondary workpiece holder (90) are arranged on a common Y-carriage (56).

5. The machine tool (10) according to claim 4, wherein the primary workpiece holder (40) is arranged indirectly via the pivot bearing (78) on the Y-carriage (56).

6. The machine tool (10) according to claim 4 or 5, wherein the frame (12) comprises a frame block (16), and wherein the Y-carriage (56) is mounted on a Y-guide (58) of the frame block (16), in particular on an underside (72) of the frame block (16), in a translatory movable manner.

7. The machine tool (10) according to claim 6, wherein the X-carriage (50) is mounted on an X-guide (52) of the frame block (16), in particular on an inclined side (70) of the frame block (16), so as to be movable in translation, and wherein the Z-carriage is mounted on a Z-guide (64) of the X-carriage (50) so as to be movable in vertical direction.

8. The machine tool (10) according to claim 7, wherein the frame block (16) is configured as an inclined bed frame block (16) and provides the X-guide (52) on the inclined side (70) and the Y-guide (58) on the underside (72).

9. The machine tool (10) according to any one of claims 1-8, wherein in the transfer orientation of the primary workpiece holder (40), joint gripping of the workpiece (42) by the primary workpiece holder (40) and the secondary workpiece holder (90) is enabled.

10. The machine tool (10) according to any one of claims 1-9, wherein the secondary workpiece holder (90) is offset horizontally with respect to the first rotational axis (B), and/or wherein the secondary workpiece holder (90) comprises a gripper (92) that is operable in a holding position for holding the workpiece (42) and in a releasing position for releasing the workpiece (42).

11. The machine tool (10) according to any one of claims 1-10, wherein a vertical plane (116) extending through the first rotational axis (B) divides the working space (24), wherein a setup side (118) is on a first side of the vertical plane (116) and a second side of the vertical plane (116) facing away from the setup side is a loading side (120), and wherein the secondary workpiece holder (90) is arranged on the setup side (118) or the loading side (120) next to the primary workpiece holder (40).

12. The machine tool (10) according to any one of claims 1-11, wherein the secondary workpiece holder (90) comprises at least two gripping arms (94, 96) in order to fix a workpiece (42), and wherein the at least two gripping arms (94, 96) are machined machine-specific in the mounted state.

13. The machine tool (10) according to any one of claims 1-12, further comprising a control device (18) configured to pivot the primary workpiece holder (40) into the transfer orientation in order that the workpiece (42) is held at least temporarily by both the primary workpiece holder (40) and the secondary workpiece holder (90), wherein the workpiece (42) is machined by the tool spindle (32) such that a finished part (110) that is held on the secondary workpiece holder (90) and a residual piece (112) that is held on the primary workpiece holder (40) can be produced, and wherein the primary workpiece holder (40) is pivotable out of the transfer orientation when the finished part (110) is separated from the residual piece (112).

14. A method for machining workpieces (42), in particular for complete machining, comprising the following steps:
- providing of a machine tool (10) according to any one of claims 1-13,
- loading the working space (24) of the machine tool (10) with a workpiece (42) to be machined,
- fixing the workpiece (42) to the primary workpiece holder (40),
- machining the workpiece (42) that is fixed to the primary workpiece holder (40) in a plurality of axes (X, Y, Z, B, C) on a plurality of sides that are accessible to the tool spindle (32),
- pivoting the primary workpiece holder (40) into a transfer orientation,
- gripping and fixing the workpiece (42) at the secondary workpiece holder (90),
- machining a further side of the workpiece (42), and
- removing the workpiece (42) from the working space (24) of the machine tool (10).

15. The method according to claim 14, further comprising:
- fixing the workpiece (42) to both the primary workpiece holder (40) and the secondary workpiece holder (90),
- machining the workpiece (42), comprising separating a finished part (110) that is held by the secondary workpiece holder (90) from a residual piece (112) that is held by the primary workpiece holder (40), and
- removing the residual piece (112) from the working space (24) of the machine tool (10).

## Revendications

1. Machine-outil (10) pour la finition de pièces (42), présentant ce qui suit :
- un châssis (12),
- une broche pour outil (32) comportant un porte-outil (34) pour la réception d'un outil (36),
- un porte-pièce primaire (40) pour la réception d'une pièce (42), et
- un porte-pièce secondaire (90),
dans laquelle la broche pour outil (32) et le porte-pièce primaire (40) peuvent être déplacés l'un par rapport à l'autre selon au moins trois axes de translation (X, Y, Z) et au moins un axe de rotation (B), afin d'usiner dans un espace de travail (24) une pièce (42) reçue sur le porte-pièce primaire (40),
dans laquelle le porte-pièce secondaire (90) est fixé dans au moins un axe de translation (X, Y, Z) par rapport au porte-pièce primaire (40),
dans laquelle le porte-pièce primaire (40) peut être pivoté dans une orientation de remise dans laquelle une préhension de la pièce (42) par le porte-pièce secondaire (90) est possible, **caractérisée en ce que** le porte-pièce primaire (40) est monté de manière à pouvoir être pivoté autour de l'axe de rotation (B) par l'intermédiaire d'un palier de pivotement (78) sur un chariot Y (56) pouvant être déplacé en translation par rapport à la broche pour outil (32),
le chariot Y (56) présente une bride de maintien (80) qui est disposée de manière solidaire en rotation par rapport à l'axe de rotation (B), et
le porte-pièce secondaire (90) est fixé à la bride de maintien (80).

2. Machine-outil (10) selon la revendication 1, dans laquelle la broche pour outil (32) est orientée verticalement, dans laquelle le porte-pièce primaire (40) peut être pivoté entre une orientation verticale et une orientation horizontale, et dans laquelle le porte-pièce primaire (40) est orienté horizontalement dans l'orientation de remise.

3. Machine-outil (10) selon la revendication 1 ou 2, dans laquelle le porte-pièce primaire (40) peut en outre tourner autour d'un second axe de rotation (C), dans laquelle le second axe de rotation (C) est orienté parallèlement à la broche pour outil (32) dans une orientation verticale du porte-pièce primaire (40), et dans laquelle le second axe de rotation (C) est orienté horizontalement dans l'orientation de remise du porte-pièce primaire (40).

4. Machine-outil (10) selon l'une des revendications 1 à 3, présentant :
- un chariot X (50) qui peut être déplacé en translation dans une première direction horizontale (54),
- le chariot Y (56) qui peut être déplacé en translation dans une seconde direction horizontale (60), et
- un chariot Z (62) qui peut être déplacé en translation dans une direction verticale (66),
dans laquelle le porte-pièce primaire (40) et le porte-pièce secondaire (90) sont disposés sur un chariot Y (56) commun.

5. Machine-outil (10) selon la revendication 4, dans laquelle le porte-pièce primaire (40) est disposé indirectement sur le chariot Y (56) par l'intermédiaire du palier de pivotement (78).

6. Machine-outil (10) selon la revendication 4 ou 5, dans laquelle le châssis (12) comprend un bloc de châssis (16), et dans laquelle le chariot Y (56) est monté de manière à pouvoir être déplacé en translation sur un guide Y (58) du bloc de châssis (16), en particulier sur un côté inférieur (72) du bloc de châssis (16).

7. Machine-outil (10) selon la revendication 6, dans laquelle le chariot X (50) est monté de manière à pouvoir être déplacé en translation sur un guide X (52) du bloc de châssis (16), en particulier sur un côté oblique (70) du bloc de châssis (16), et dans laquelle le chariot Z est monté de manière à pouvoir être déplacé verticalement sur un guide Z (64) du chariot X (50).

8. Machine-outil (10) selon la revendication 7, dans laquelle le bloc de châssis (16) est conçu comme un bloc de châssis à banc oblique (16) et fournit le guide X (52) sur le côté oblique (70) et le guide Y (58) sur le côté inférieur (72).

9. Machine-outil (10) selon l'une des revendications 1 à 8, dans laquelle, dans l'orientation de remise du porte-pièce primaire (40), une préhension commune de la pièce (42) par le porte-pièce primaire (40) et par le porte-pièce secondaire (90) est possible.

10. Machine-outil (10) selon l'une des revendications 1 à 9, dans laquelle le porte-pièce secondaire (90) est décalé horizontalement par rapport au premier axe de rotation (B), et/ou dans laquelle le porte-pièce secondaire (90) comprend une pince (92) qui peut fonctionner dans une position de maintien pour le maintien de la pièce (42) et dans une position de libération pour la libération de la pièce (42).

11. Machine-outil (10) selon l'une des revendications 1 à 10, dans laquelle un plan vertical (116) divise l'espace de travail (24) par le premier axe de rotation (B), dans laquelle un côté préparation (118) se trouve sur un premier côté du plan vertical (116) et un côté chargement (120) se trouve sur un second côté du plan vertical (116) qui en est éloigné, et dans laquelle le porte-pièce secondaire (90) est disposé sur le côté préparation (118) ou sur le côté chargement (120) à côté du porte-pièce primaire (40).

12. Machine-outil (10) selon l'une des revendications 1 à 11, dans laquelle le porte-pièce secondaire (90) présente au moins deux bras de préhension (94, 96) afin de fixer une pièce (42), et dans laquelle les au moins deux bras de préhension (94, 96) fonctionnent individuellement par machine à l'état monté.

13. Machine-outil (10) selon l'une des revendications 1 à 12, présentant en outre un dispositif de commande (18) configuré pour faire pivoter le porte-pièce primaire (40) dans l'orientation de remise afin que la pièce (42) soit maintenue au moins temporairement à la fois par le porte-pièce primaire (40) et par le porte-pièce secondaire (90), dans laquelle la pièce (42) est usinée par la broche pour outil (32) de sorte qu'une pièce finie (110), laquelle est maintenue sur le porte-pièce secondaire (90), et une pièce résiduelle (112), laquelle est maintenue sur le porte-pièce primaire (40), peuvent être produites, et dans laquelle le porte-pièce primaire (40) peut être pivoté hors de l'orientation de remise lorsque la pièce finie (110) est séparée de la pièce résiduelle (112).

14. Procédé pour l'usinage de pièces (42), en particulier pour la finition, comportant les étapes suivantes :
- fourniture d'une machine-outil (10) selon l'une des revendications 1 à 13,
- chargement de l'espace de travail (24) de la machine-outil (10) avec une pièce (42) à usiner,
- fixation de la pièce (42) sur le porte-pièce primaire (40),
- usinage de la pièce (42) fixée au porte-pièce primaire (40) selon plusieurs axes (X, Y, Z, B, C) sur plusieurs côtés accessibles à la broche pour outil (32),
- pivotement du porte-pièce primaire (40) dans une orientation de remise,
- saisie et fixation de la pièce (42) sur le porte-pièce secondaire (90),
- usinage d'un autre côté de la pièce (42), et
- retrait de la pièce (42) hors de l'espace de travail (24) de la machine-outil (10).

15. Procédé selon la revendication 14, présentant en outre :
- la fixation de la pièce (42) à la fois sur le porte-pièce primaire (40) et sur le porte-pièce secondaire (90),
- l'usinage de la pièce (42), comprenant la séparation d'une pièce finie (110) maintenue par le porte-pièce secondaire (90) d'une pièce résiduelle (112) maintenue par le porte-pièce primaire (40), et
- l'évacuation de la pièce résiduelle (112) hors de l'espace de travail (24) de la machine-outil (10).
